# EUROPEAN PATENT SPECIFICATION

(11) **EP 2 696 515 B1**
(45) Date of publication and mention of the grant of the patent: **17.04.2019**
(21) Application number: 11755708.2
(22) Date of filing: 27.04.2011
(51) Int. Cl.: H04W 24/08, H04W 76/10, H04M 3/487

(54) **METHOD, BASE STATION CONTROLLER AND MOBILE SWITCH CENTER FOR NOTIFYING STATE OF PILOT SIGNAL**
VERFAHREN, BASISSTATIONSSTEUERUNG UND MOBILEN VERMITTLUNGSZENTRUM ZUR ANZEIGE DES ZUSTANDES EINES PILOTSIGNALS
PROCÉDÉ, CONTRÔLEUR DE STATION DE BASE ET CENTRE DE COMMUTATION MOBILE POUR LA NOTIFICATION D'ÉTAT D'UN SIGNAL PILOTE

(43) Date of publication of application: 12.02.2014
(73) Proprietor: Huawei Device (Dongguan) Co., Ltd., Dongguan, Guangdong 523808 (CN)
(72) Inventor: XIAO, Hansong, Guangdong 518129 (CN)
(74) Representative: Epping - Hermann - Fischer
(86) International application number: PCT/CN2011/073372
(87) International publication number: WO 2011/113391

(56) References cited:
- CN-A- 1 989 778
- CN-A- 101 026 881
- CN-A- 101 800 950
- US-A- 5 722 068
- US-A- 5 732 347
- US-A1- 2006 025 122
- US-A1- 2006 068 731
- US-A1- 2010 022 224

## Description

### TECHNICAL FIELD

The present invention relates to the field of a mobile communication device, and in particular, to a pilot signal state prompting method, a base station controller, and a mobile switching center.

### BACKGROUND

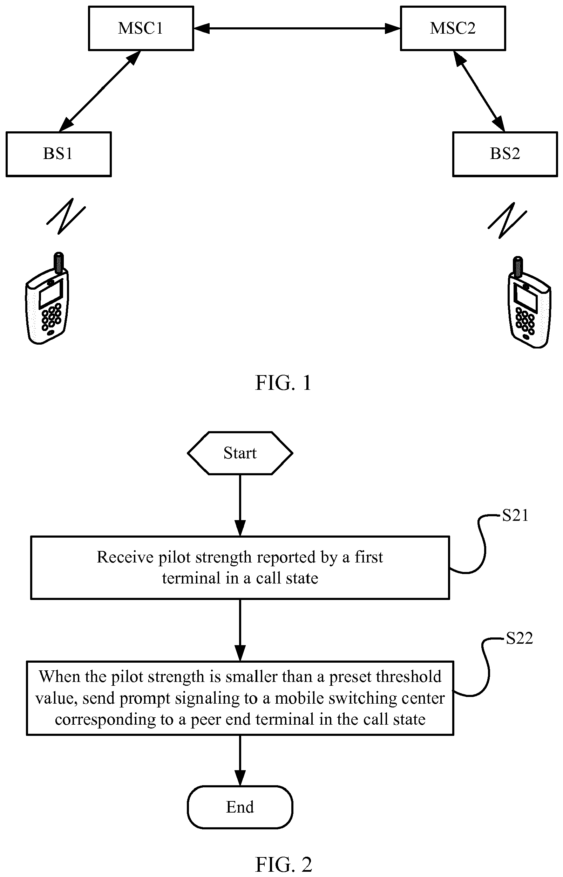

In a CDMA (Code Division Multiple Access, code division multiple access) network, after two mobile terminal users A and B establish a call, a simplified model of their network topology structure is as shown in FIG. 1, and includes a base station system BS1 and a mobile switching center MSC1 that correspond to the user A, and a base station system BS2 and a mobile switching center MSC2 that correspond to the user B. A BS is a wireless transceiver device of the CDMA network, and mainly performs wireless communication with a mobile terminal. An MS is responsible for managing traffic of a mobile user.

In a calling state of a terminal user, a terminal reports currently detected pilot strength to a BS. When the terminal user is in a wireless environment with a stronger signal, a reported pilot strength value is higher, and on the contrary, a reported pilot strength value is smaller. As a result, the BS can monitor the pilot strength of the terminal in real time, thereby determining, according to a pilot strength value, signal strength of a wireless environment where the terminal user is located.

The weaker a signal in an environment where the terminal user A is located is, the smaller a value of pilot strength detected by the BS1 is. When the value decreases to a certain extent, the user A may experience an exception, such as an interrupted call and a voiceless call. Because of the exception on the user A, the user B also experiences a call exception. For example, the user B says a lot of words to the user A, but cannot hear any response from the user A, which severely affects communication quality and decreases user experience.

US 2006/025122 A1 provides a method and system for use in reducing cost associated with lost connections in wireless communication. As described therein, the RAN 134 or PCF 132 monitor the wireless link 112 with the first wireless device 122 and/or the PCF 132 monitors the link with the third wireless device 128. If the RAN 134 and/or PCF 132 detects that the link 112 is no longer active the PCF generates a notification that the first wireless device 122 (or third device 128) no longer has an active link. By having the RAN 134 and/or PCF 132 monitor the wireless link 112, the system 110 rapidly detects the loss. As a result, the second user is quickly notified that the first user lost the connection and the second user can take appropriate steps (e.g., try and reconnect, disconnect, and other similar functions), without having to wait extended periods of time trying to determine whether or not the first user is still connected.

US 5,732,347 is related to a method of notifying a user of a digital cellular telephone during digital cellular communication of an imminent digital communication disconnection. The method comprises the steps of: generating a condition indication representative of a digital communication condition, including generating a transmitter output power level indication, and analyzing the condition indication to determine whether a digital communication disconnection is imminent, including determining whether the transmitter output power level indication is less than a predefined low power threshold level; and notifying the user that a digital communication disconnection is imminent responsive to determining a digital communication disconnection is imminent.

US 2006/068731 A1 is related to a method of alerting a user to possible loss of a call due to low signal strength a cellular telephone having a keypad. The method comprises: measuring incoming signal strength; calculating changes in incoming signal strength; comparing changes in incoming signal strength; and providing an advisory alert to said user that indicates the possible loss of a call due to low signal strength when, during a designated time interval, the incoming signal strength decreased by a designated percentage. As described therein, data of incoming signal strength is measured in the cell phone per block 210. Clearly, the cellular telephone runs program to provide the user of the cell phone the advisory alert that indicates the possible loss of a call due to low signal strength, not to provide a peer end telephone the advisory alert that indicates the possible loss of a call due to low signal strength.

US 2010/022224 A1 is related to a mobile phone alert method, the method comprising: setting one or more alert conditions of a mobile phone, and setting a response message corresponding to each of the alert conditions; storing the one or more alert conditions and the response message of each alert condition into a storage system; communicating with a contact mobile phone via a first network; monitoring communication status of the mobile phone with the contact mobile phone over the first network; determining if an alert condition occurs to the mobile phone by determining if the communication status meets the one or more alert conditions; retrieving a response message corresponding to the alert condition from the storage system, in response to a determination that an alert condition occurs to the mobile phone; and sending the response message to the contact mobile phone via the first network.

### SUMMARY

In view of this, the present invention provides a pilot signal state prompting method, and a network comprising a base station controller and a mobile switching center. Specific solutions are as follows:
A pilot signal state prompting method includes:
   receiving, by a base station controller corresponding to a first terminal, pilot strength reported by a first terminal in a call state; and
   when the pilot strength is smaller than a preset threshold value, sending, by the base station controller, prompt signaling to a mobile switching center corresponding to a peer end terminal in the call state, and sending, by the mobile switching center corresponding to the peer end terminal, according to the prompt signaling, to the peer end terminal, a prompt message indicating that a pilot signal state of the first terminal is poor, wherein the prompt message is a voice prompt message.
A network comprising a base station controller corresponding to a peer end terminal and a mobile switching center corresponding to a peer end terminal, the base station includes:
   a pilot strength receiving module, configured to receive pilot strength reported by the first terminal in a call state; and
   a prompt signaling sending module, configured to, when the pilot strength is smaller than a preset threshold value, send prompt signaling to the mobile switching center corresponding to the peer end terminal in the call state; and
   the mobile switching center includes:
      a prompt signaling receiving module, configured to receive the prompt signaling, sent by the base station controller; and
      a prompt message sending module, configured to send, according to the prompt signaling, to the peer end terminal in the call state, a prompt message indicating that a pilot signal state of the first terminal is poor, wherein the prompt message is a voice prompt message.

It can be seen from the foregoing technical solutions that, in the pilot signal state prompting method disclosed by the embodiments of the present invention, a base station controller detects pilot strength reported by a first terminal, and when the pilot strength is smaller than a preset threshold value, sends prompt signaling to a mobile switching center corresponding to a peer end terminal, so that the switching center sends a prompt message to the peer end terminal according to the prompt signaling. In this way, the peer end terminal may timely obtain a pilot signal state of the first terminal, thereby ensuring call quality and improving user experience.

### BRIEF DESCRIPTION OF DRAWINGS

To illustrate the technical solutions in the embodiments of the present invention or in the prior art more clearly, the following briefly introduces accompanying drawings required for describing the embodiments or the prior art. Apparently, the accompanying drawings in the following description show merely some embodiments of the present invention, and a person of ordinary skill in the art may still derive other drawings according to these accompanying drawings without creative efforts.
FIG. 1 is a structural diagram of a communication network topology;
FIG. 2 is a flowchart of a pilot signal state prompting method according to an embodiment of the present invention;
FIG. 3 is a flowchart of another pilot signal state prompting method according to an embodiment of the present invention;
FIG. 4 is a flowchart of another pilot signal state prompting method according to an embodiment of the present invention;
FIG. 5 is a schematic structural diagram of a base station controller according to an embodiment of the present invention; and
FIG. 6 is a schematic structural diagram of a mobile switching center according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

An embodiment of the present invention discloses a pilot signal state prompting method, which is applied to a CDMA network, and may achieve a purpose that a peer end terminal may learn it timely in a case that signal quality of a terminal is poor during a calling process, thereby improving user experience.

A flowchart of a pilot signal state prompting method disclosed by an embodiment of the present invention is as shown in FIG. 2, where the method includes:
Step S21: Receive pilot strength reported by a first terminal in a call state.
Step S22: When the pilot strength is smaller than a preset threshold value, send prompt signaling to a mobile switching center corresponding to a peer end terminal in the call state, so that the mobile switching center corresponding to the peer end terminal sends, according to the prompt signaling, to the peer end terminal, a prompt message indicating that a pilot signal state of the first terminal is poor.

Further, when the pilot strength is not smaller than the preset threshold value, no operation is performed.

Further, when terminals of two calling parties are in a same mobile switching center, a process of sending the prompt signaling to the mobile switching center corresponding to the peer end terminal in the call state is: A base station controller sends the prompt signaling to the mobile switching center corresponding to the first terminal and the peer end terminal, so as to send the prompt message to the peer end terminal through the mobile switching center.

However, when the terminals of the two calling parties are in different mobile switching centers, the process of sending the prompt signaling to the mobile switching center corresponding to the peer end terminal in the call state includes:
sending the prompt signaling to a mobile switching center corresponding to the first terminal; and
sending, by the mobile switching center corresponding to the first terminal, the prompt signaling to the mobile switching center corresponding to the peer end terminal.

Finally, send a prompt message to the peer end terminal through the mobile switching center corresponding to the peer end terminal, where the prompt message may be a voice prompt message, that is, the mobile switching center corresponding to the peer end terminal sends a voice message to the peer end terminal, and main content of the voice message is that the pilot signal state of the first terminal is poor, for example, "Friendly Reminder: The signal of the user you are calling is poor, and a call exception may occur." Or, a text message is sent to the peer end terminal, such as a short message, and main content of the short message is that the pilot signal state of the first terminal is poor. Taking an actual application scenario into consideration, a user usually cannot timely check a received short message during a call. Therefore, by adopting a manner of sending a short message, it is likely that a user of the peer end terminal can learn, only after a call is ended, that the pilot signal state of the first terminal is poor, and its timeliness is worse as compared with a voice prompt manner. Likewise, a manner of simultaneously sending a voice prompt message and a text message may also be adopted. Besides the short message, the text message may also include a multimedia message or an email.

In the pilot signal state prompting method disclosed by the embodiment, a base station controller receives pilot strength reported by a first terminal and performs detection, and when the pilot strength is smaller than a preset threshold value, sends prompt signaling to a mobile switching center corresponding to a peer end terminal, so that the mobile switching center sends a prompt message to the peer end terminal according to the prompt signaling. In this way, the peer end terminal may timely obtain a pilot signal state of the first terminal and learn a reason why a normal call cannot be performed currently, thereby ensuring call quality and improving user experience.

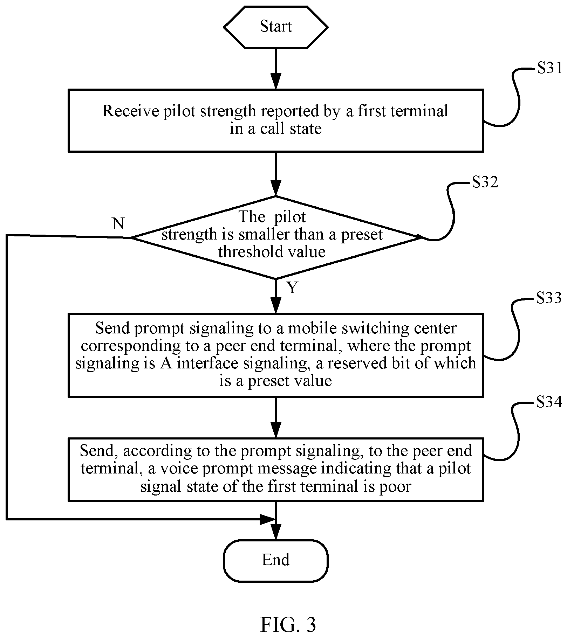

A flowchart of another pilot signal state prompting method disclosed by an embodiment of the present invention is as shown in FIG. 3, where the method includes:
Step S31: A base station controller receives pilot strength reported by a first terminal in a call state.
Step S32 Determine whether the pilot strength is smaller than a preset threshold value, and if yes, perform step S33; if no, end.

The preset threshold value MIN_PILOT in the embodiment is -28 dbm and may also be -30 dbm or another value dynamically set according to an actual network condition.

Step S33: Send prompt signaling to a mobile switching center corresponding to a peer end terminal, where the prompt signaling is A interface signaling, a reserved bit of which is a preset value.

In the embodiment, a manner of assigning the preset value to the reserved bit of the A interface signaling according to a preset rule may be adopted to obtain the prompt signaling. A specific assignment manner may be: setting the reserved bit of the A interface signaling between the base station controller and the mobile switching center to 1.

In the embodiment, by extending the A interface signaling applied between the base station controller and the mobile switching center, the prompt signaling is sent by using the extended A interface signaling. Generally speaking, extension is to endow a bit with a reserved bit in an original rule with a new function. Therefore, a general extension manner is using an idle bit or multiplexing a bit with another function. In the embodiment, a manner of setting an idle bit is adopted, and all reserved idle bits are set to 1 according to the preset rule, indicating that the currently sent signaling is the prompt signaling.

Step S34: The mobile switching center corresponding to the peer end terminal sends, according to the prompt signaling, to the peer end terminal, a voice prompt message indicating that a pilot signal state of the first terminal is poor.

In the embodiment, it is not limited to adopt the manner of setting all reserved idle bits to 1 to perform signaling extension. A specific extension solution may be set according to different situations, for example, setting a specific reserved bits to 1, as long as it is ensured that the mobile switching center corresponding to the peer end terminal can identify the extended signaling as the prompt signaling.

In the pilot signal state prompting method disclosed by the embodiment, signaling between a base station controller and a mobile switching center is extended to obtain prompt signaling, so that in this method, existing signaling is used as a carrier and an existing signaling transmission mode is used to implement transmission of the prompt signaling, which is simple to operate and easy to implement.

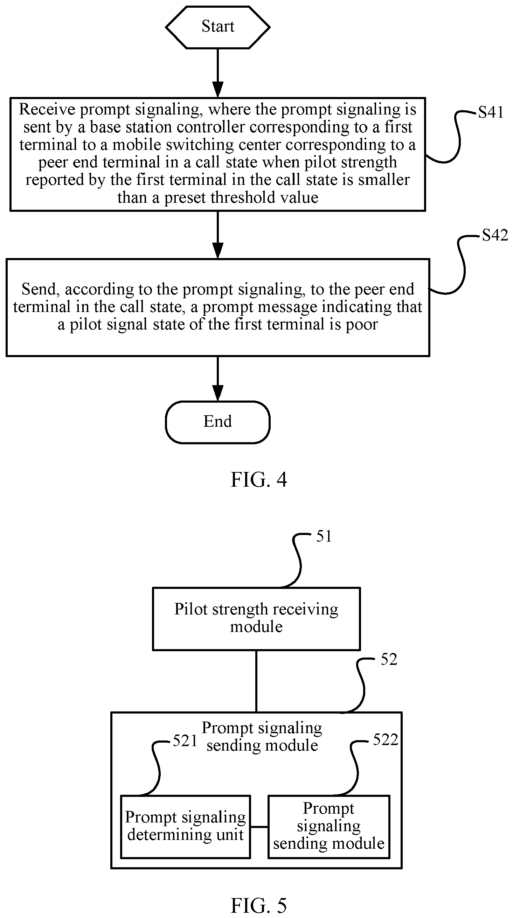

A flowchart of another pilot signal state prompting method simultaneously disclosed by an embodiment of the present invention is as shown in FIG. 4, where the method includes:
Step S41: Receive prompt signaling, where the prompt signaling is sent by a base station controller corresponding to a first terminal to a mobile switching center corresponding to a peer end terminal in a call state when pilot strength reported by the first terminal in the call state is smaller than a preset threshold value.
Step S42: Send, according to the prompt signaling, to the peer end terminal in the call state, a prompt message indicating that a pilot signal state of the first terminal is poor.

The method disclosed by the embodiment is applied to a mobile switching center corresponding to the first terminal, and corresponds to the method shown in FIG. 2 or FIG. 3, and finally achieves a purpose of sending the prompt message to the peer end terminal so that the peer end terminal can timely obtain the pilot signal state of the first terminal. When terminals of two calling parties are at a same mobile switching center, the method is also applied to the mobile switching center corresponding to both the first terminal and the peer end terminal.

The prompt message in the embodiment may be a voice prompt message, a text prompt message, or a voice prompt message and a text prompt message that are simultaneously sent. Besides a short message, the text prompt message may also include a multimedia message or an email. Content of the voice prompt message and the text prompt message is not limited. Content that can enable the peer end terminal to learn the pilot signal state of the first terminal falls in the protection scope of the embodiment.

The present invention simultaneously discloses a base station controller, a structure of which is as shown in FIG. 5, including: a pilot strength receiving module 51 and a prompt signaling sending module 52, where
the pilot strength receiving module 51 is configured to receive pilot strength reported by a first terminal in a call state; and the prompt signaling sending module 52 is configured to, when the pilot strength is smaller than a preset threshold value, send prompt signaling to a mobile switching center corresponding to a peer end terminal in the call state, so that the mobile switching center corresponding to the peer end terminal send, according to the prompt signaling, to the peer end terminal, a prompt message indicating that a pilot signal state of the first terminal is poor. The prompt signaling is A interface signaling, a reserved bit of which is a preset value. A method for assigning the preset value to the reserved bit of the A interface signaling is the same as that in the foregoing embodiment, and is not described in detail herein again.

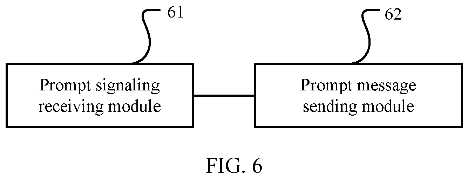

The present invention simultaneously discloses a mobile switching center, a structure of which is as shown in FIG. 6, including: a prompt signaling receiving module 61 and a prompt message sending module 62, where
the prompt signaling receiving module 61 is configured to receive prompt signaling, where the prompt signaling is sent by a base station controller corresponding to a first terminal to a mobile switching center corresponding to a peer end terminal in a call state when pilot strength reported by the first terminal in the call state is smaller than a preset threshold value; and the prompt message sending module 62 is configured to send, according to the prompt signaling, to the peer end terminal in the call state, a prompt message indicating that a pilot signal state of the first terminal is poor.

The mobile switching center disclosed by the embodiment coordinately works with the base station controller shown in FIG. 5. The base station controller receives pilot strength sent by a first terminal during a calling process, and when it is determined that the pilot strength is smaller than a preset threshold value, sends prompt signaling to a mobile switching center corresponding to a peer end terminal in a call state, and after receiving the prompt signaling, the mobile switching center sends, according to the prompt signaling, to the peer end terminal, a prompt message indicating that a pilot signal state of the first terminal is poor, so that the peer end terminal can timely obtain the pilot signal state of the first terminal during the calling process and learn a reason why a normal call cannot be performed currently, thereby improving user experience.

All the embodiments in this specification are described in a progressive manner. Each embodiment emphasizes a difference from other embodiments. For same and similar parts among all the embodiments, reference may be made to each other. The apparatuses disclosed in the embodiments correspond to the methods disclosed in the embodiments, and therefore, are simply described. For a related part, reference may be made to the description in the method embodiments.

A person skilled in the art may be further aware that the units and algorithm steps of each example described in combination with the embodiments disclosed in this specification can be implemented by electronic hardware, computer software, or a combination of the two. To clearly describe interchangeability of the hardware and software, the composition and steps of each example are generally described according to functions in the preceding description. Whether the functions are performed in a hardware or software manner depends on particular applications and design constraint conditions of the technical solutions. A person skilled in the art may use different methods to implement the described functions for each particular application, but it should not be considered that the implementation goes beyond the scope of the present invention.

The methods or algorithm steps described in combination with the embodiments disclosed in this specification may be implemented by directly using hardware or a software module executed by a processor, or a combination of the two. The software module may be disposed in a random access memory (RAM), a memory, a read only memory (ROM), an electrically programmable ROM, an electrically erasable programmable ROM, a register, a hard disk, a removable disk, a CD-ROM, or any other storage media well-known in the art.

The preceding description of the disclosed embodiments enables a person skilled in the art to implement or use the present invention. A plurality of modifications to these embodiments are apparent for a person skilled in the art. A general principle defined in the present invention may be implemented in other embodiments without departing from the scope of the present invention. Therefore, the present invention will not be limited to the embodiments described in the specification but extends to a widest scope that complies with the principle and novelty disclosed in the specification.

## Claims

1. A pilot signal state prompting method, comprising:
receiving (S21), by a base station controller corresponding to a first terminal, pilot strength reported by the first terminal in a call state;
when the pilot strength is smaller than a preset threshold value, sending (S22), by the base station controller, prompt signaling to a mobile switching center corresponding to a peer end terminal in the call state; and
sending (S42), by the mobile switching center corresponding to the peer end terminal, according to the prompt signaling, to the peer end terminal, a prompt message indicating that a pilot signal state of the first terminal is poor, wherein the prompt message is a voice prompt message.

2. The method according to claim 1, wherein when a mobile switching center corresponding to the first terminal and the mobile switching center corresponding to the peer end terminal are the same, a process of sending the prompt signaling to the mobile switching center corresponding to the peer end terminal in the call state comprises:
sending the prompt signaling to the mobile switching center corresponding to the first terminal and the peer end terminal.

3. The method according to claim 1, wherein when a mobile switching center corresponding to the first terminal and the mobile switching center corresponding to the peer end terminal are different, a process of sending the prompt signaling to the mobile switching center corresponding to the peer end terminal in the call state comprises:
sending the prompt signaling to the mobile switching center corresponding to the first terminal; and
sending, by the mobile switching center corresponding to the first terminal, the prompt signaling to the mobile switching center corresponding to the peer end terminal.

4. The method according to any one of claims 1 to 3, wherein the prompt signaling is a interface signaling, a reserved bit of which is a preset value.

5. A network comprising a base station controller corresponding to a first terminal and a mobile switching center corresponding to a peer end terminal,
the base station controller comprising:
a pilot strength receiving module (51), configured to receive pilot strength reported by the first terminal in a call state; and
a prompt signaling sending module (52), configured to, when the pilot strength is smaller than a preset threshold value, send prompt signaling to the mobile switching center corresponding to the peer end terminal in the call state; and
the mobile switching center comprising:
a prompt signaling receiving module (61), configured to receive the prompt signaling sent by the base station controller corresponding to the first terminal; and
a prompt message sending module (62), configured to send, according to the prompt signaling, to the peer end terminal in the call state, a prompt message indicating that a pilot signal state of the first terminal is poor, wherein the prompt message is a voice prompt message.

6. The network according to claim 5, wherein the prompt signaling is a interface signaling, a reserved bit of which is a preset value.

## Patentansprüche

1. Pilotsignalzustandsaufforderungsverfahren, umfassend:
Empfangen (S21), durch einen Basisstations-Controller entsprechend einem ersten Endgerät, einer durch das erste Endgerät in einem Rufzustand gemeldeten Pilotstärke; wenn die Pilotstärke kleiner als ein vorgegebener Schwellwert ist, Senden (S22), durch den Basisstations-Controller, einer Aufforderungssignalisierung zu einer Mobilfunkvermittlungsstelle entsprechend einem Peer-Endgerät in dem Rufzustand; und
Senden (S42), durch die Mobilfunkvermittlungsstelle entsprechend dem Peer-Endgerät, gemäß der Aufforderungssignalisierung, zu dem Peer-Endgerät, einer Aufforderungsnachricht, die angibt, dass ein Pilotsignalzustand des ersten Endgeräts schlecht ist, wobei die Aufforderungsnachricht eine Sprachaufforderungsnachricht ist.

2. Verfahren nach Anspruch 1, wobei, wenn eine Mobilfunkvermittlungsstelle entsprechend dem ersten Endgerät und die Mobilfunkvermittlungsstelle entsprechend dem Peer-Endgerät gleich sind, ein Verfahren zum Senden der Aufforderungssignalisierung zu der Mobilfunkvermittlungsstelle entsprechend dem Peer-Endgerät in dem Rufzustand Folgendes umfasst:
Senden der Aufforderungssignalisierung zu der Mobilfunkvermittlungsstelle entsprechend dem ersten Endgerät und dem Peer-Endgerät.

3. Verfahren nach Anspruch 1, wobei, wenn eine Mobilfunkvermittlungsstelle entsprechend dem ersten Endgerät und die Mobilfunkvermittlungsstelle entsprechend dem Peer-Endgerät verschieden sind, ein Verfahren zum Senden der Aufforderungssignalisierung zu der Mobilfunkvermittlungsstelle entsprechend dem Peer-Endgerät in dem Rufzustand Folgendes umfasst:
Senden der Aufforderungssignalisierung zu der Mobilfunkvermittlungsstelle entsprechend dem ersten Endgerät; und
Senden, durch die Mobilfunkvermittlungsstelle entsprechend dem ersten Endgerät, der Aufforderungssignalisierung zu der Mobilfunkvermittlungsstelle entsprechend dem Peer-Endgerät.

4. Verfahren nach einem der Ansprüche 1 bis 3, wobei die Aufforderungssignalisierung eine Schnittstellensignalisierung ist, von der ein reserviertes Bit ein vorgegebener Wert ist.

5. Netzwerk, umfassend einen Basisstations-Controller entsprechend einem ersten Endgerät und eine Mobilfunkvermittlungsstelle entsprechend einem Peer-Endgerät, der Basisstations-Controller umfassend:
ein Pilotstärkeempfangsmodul (51), das dazu konfiguriert ist, eine durch das erste Endgerät in einem Rufzustand gemeldete Pilotstärke zu empfangen; und
ein Aufforderungssignalisierungssendemodul (52), das dazu konfiguriert ist, wenn die Pilotstärke kleiner als ein vorgegebener Schwellwert ist, eine Aufforderungssignalisierung zu der Mobilfunkvermittlungsstelle entsprechend dem Peer-Endgerät in dem Rufzustand zu senden; und
die Mobilfunkvermittlungsstelle umfassend:
ein Aufforderungssignalisierungsempfangsmodul (61), das dazu konfiguriert ist, die durch den Basisstations-Controller entsprechend dem ersten Endgerät gesendete Aufforderungssignalisierung zu empfangen;
und ein Aufforderungsnachrichtsendemodul (62), das dazu konfiguriert ist, gemäß der Aufforderungssignalisierung eine Aufforderungsnachricht, die angibt, dass ein Pilotsignalzustand des ersten Endgeräts schlecht ist, zu dem Peer-Endgerät in dem Rufzustand zu senden, wobei die Aufforderungsnachricht eine Sprachaufforderungsnachricht ist.

6. Netzwerk nach Anspruch 5, wobei die Aufforderungssignalisierung eine Schnittstellensignalisierung ist, von der ein reserviertes Bit ein vorgegebener Wert ist.

## Revendications

1. Procédé de sollicitation d'état de signal pilote, comprenant :
la réception (S21), par un contrôleur de station de base correspondant à un premier terminal, d'une intensité pilote signalée par le premier terminal dans un état d'appel ; lorsque l'intensité pilote est inférieure à une valeur de seuil prédéfinie, l'envoi (S22), par le contrôleur de station de base, d'une signalisation de sollicitation à un centre de commutation mobile correspondant à un terminal d'extrémité pair dans l'état d'appel ; et
l'envoi (S42), par le centre de commutation mobile correspondant au terminal d'extrémité pair, conformément à la signalisation de sollicitation, au terminal d'extrémité pair, d'un message de sollicitation indiquant qu'un état de signal pilote du premier terminal est mauvais, le message de sollicitation étant un message de sollicitation vocal.

2. Procédé selon la revendication 1, dans lequel lorsqu'un centre de commutation mobile correspondant au premier terminal et le centre de commutation mobile correspondant au terminal d'extrémité pair sont le même, un processus d'envoi de la signalisation de sollicitation au centre de commutation mobile correspondant au terminal d'extrémité pair dans l'état d'appel comprend :
l'envoi de la signalisation de sollicitation au centre de commutation mobile correspondant au premier terminal et au terminal d'extrémité pair.

3. Procédé selon la revendication 1, dans lequel lorsqu'un centre de commutation mobile correspondant au premier terminal et le centre de commutation mobile correspondant au terminal d'extrémité pair sont différents, un processus d'envoi de la signalisation de sollicitation au centre de commutation mobile correspondant au terminal d'extrémité pair dans l'état d'appel comprend :
l'envoi de la signalisation de sollicitation au centre de commutation mobile correspondant au premier terminal ; et
l'envoi, par le centre de commutation mobile correspondant au premier terminal, de la signalisation de sollicitation au centre de commutation mobile correspondant au terminal d'extrémité pair.

4. Procédé selon l'une quelconque des revendications 1 à 3, dans lequel la signalisation de sollicitation est une signalisation d'interface, dont un bit réservé est une valeur prédéfinie.

5. Réseau comprenant un contrôleur de station de base correspondant à un premier terminal et un centre de commutation mobile correspondant à un terminal d'extrémité pair,
le contrôleur de station de base comprenant :
un module de réception d'intensité pilote (51), configuré pour recevoir une intensité pilote signalée par le premier terminal dans un état d'appel ; et
un module d'envoi de signalisation de sollicitation (52), configuré pour, lorsque l'intensité pilote est inférieure à une valeur de seuil prédéfinie, envoyer une signalisation de sollicitation au centre de commutation mobile correspondant au terminal d'extrémité pair dans l'état d'appel ; et
le centre de commutation mobile comprenant :
un module de réception de signalisation de sollicitation (61), configuré pour recevoir la signalisation de sollicitation envoyée par le contrôleur de station de base correspondant au premier terminal ; et
un module d'envoi de message de sollicitation (62), configuré pour envoyer, conformément à la signalisation de sollicitation, au terminal d'extrémité pair dans l'état d'appel, un message de sollicitation indiquant qu'un état de signal pilote du premier terminal est mauvais, le message de sollicitation étant un message de sollicitation vocal.

6. Réseau selon la revendication 5, dans lequel la signalisation de sollicitation est une signalisation d'interface, dont un bit réservé est une valeur prédéfinie.
